# EUROPÄISCHE PATENTSCHRIFT

(11) **EP 1 106 934 B1**
(45) Veröffentlichungstag und Bekanntmachung des Hinweises auf die Patenterteilung: **18.09.2002**
(21) Anmeldenummer: 99124218.1
(22) Anmeldetag: 03.12.1999
(51) Int. Cl.: F24D 3/14

(54) **Hohlprofilbauelement**
Hollow profile building element
Elément de construction à profilés creux

(43) Veröffentlichungstag der Anmeldung: 13.06.2001
(73) Patentinhaber: Annies, Thomas, 44879 Bochum (DE); Wortmann, Ralph, 44795 Bochum (DE); Scheerer, Michael, 44791 Bochum (DE)
(72) Erfinder: Annies, Thomas, 44879 Bochum (DE); Wortmann, Ralph, 44795 Bochum (DE); Scheerer, Michael, 44791 Bochum (DE)
(74) Vertreter: Rohmann, Michael, Dr.

(56) Entgegenhaltungen:
- FR-A- 2 481 421
- US-A- 1 744 517
- US-A- 4 638 853

## Beschreibung

Die Erfindung betrifft ein Hohlprofilbauelement, insbesondere für den Einbau in Gebäudefassaden, wobei zumindest ein in Längsrichtung des Hohlprofilbauelementes verlaufender Luftströmungskanal vorgesehen ist und wobei in dem Luftströmungskanal zumindest zwei Heizrohre angeordnet sind, welche Heizrohre von einem fluiden Heizmedium durchströmbar sind, wobei das Hohlprofilbauelement in einem unteren Längsabschnitt zumindest eine Lusteinströmöffnung und in einem oberen Längsabschnitt zumindest eine Luftausströmöffnung aufweist. - Derartige Hohlprofilbauelemente werden insbesondere für die Beheizung der Innenräume von Gebäuden eingesetzt. Die durch den Luftströmungskanal bzw. durch das Hohlprofilbauelement geleitete Luft wird mit Hilfe der Heizrohre bzw. mit Hilfe des durch die Heizrohre geleiteten fluiden Mediums aufgeheizt und als Heizluft aus den Hohlprofilbauelementen wieder abgegeben. Als die Heizrohre durchströmendes Heizmedium wird in der Regel aufgeheiztes Wasser eingesetzt. - Die erfindungsgemäßen Hohlprofilbauelemente können statt zur Beheizung auch zur Kühlung, insbesondere zur Kühlung der Innenräume von Gebäuden eingesetzt werden. Dazu wird durch die Heizrohre ein geeignetes Kühlmedium, beispielsweise abgekühltes Wasser, geleitet. Wenn nachfolgend von Beheizung bzw. Heizung die Rede ist, meint dies auch eine Kühlung. Ebenso ist mit dem Begriff Heizmedium bzw. fluides Heizmedium auch ein Kühlmedium gemeint.

Ein Hohlprofilbauelement der eingangs genannten Art, von dem die Erfindung ausgeht, ist aus FR 2 481 421 A bekannt.

Die hier beschriebenen Hohlprofilbauelemente zeichnen sich jedoch durch beachtliche Nachteile aus. Wenn Störungen im Inneren der Hohlprofilbauelemente auftreten und wenn beispielsweise die Funktionsweise der Heizrohre durch Leckagen oder Verstopfungen beeinträchtigt wird, muss entweder das gesamte Hohlprofilbauelement ausgetauscht werden oder die Heizrohre müssen in aufwendiger Weise mit Hilfe von Werkzeugen aus einem Hohlprofilbauelement entfernt werden. Diese Maßnahmen sind natürlich extrem aufwendig. Ein Austausch eines Hohlprofilbauelementes ist insbesondere dann problematisch, wenn dieses Hohlprofilbauelement eine tragende Funktion bezüglich des entsprechenden Gebäudes aufweist. Dann können nur die Heizrohre in der beschriebenen aufwendigen Weise mit Hilfe von Werkzeugen entfernt werden.

Demgegenüber liegt der Erfindung das technische Problem zugrunde, ein Hohlprofilbauelement der eingangs genannten Art anzugeben, bei dem Montage-, Reparatur- und Wartungsarbeiten einfach und problemlos durchführbar sind.

Zur Lösung dieses technischen Problems lehrt die Erfindung ein Hohlprofilbauelement, insbesondere für den Einbau in Gebäudefassaden,
wobei zumindest ein in Längsrichtung des Hohlprofilbauelementes verlaufender Luftströmungskanal vorgesehen ist,
wobei in dem Luftströmungskanal zumindest zwei Heizrohre angeordnet sind, welche Heizrohre von einem fluiden Heizmedium durchströmbar sind,
wobei das Hohlprofilbauelement in einem unteren Längsabschnitt zumindest eine Lufteinströmöffnung und in einem oberen Längsabschnitt zumindest eine Luftausströmöffnung aufweist,
wobei die Heizrohre flexibel mit der Maßgabe ausgebildet sind, dass sie durch eine erste Öffnung in einer Längsseitenwand im unteren Längsabschnitt oder durch eine zweite Öffnung in einer Längsseitenwand im oberen Längsabschnitt in der Hohlprofilbauelement einführbar sind oder aus dem Hohlprofilbauelement entnehmbar sind
und wobei die Heizrohre mit der Maßgabe ausgebildet sind, dass auf die Heizrohre nach einer Verformung beim Einführen in das Hohlprofilbauelement durch eine der Öffnungen oder beim Entnehmen aus dem Hohlprofilbauelement durch eine der Öffnungen elastische Rückstellkräfte einwirken, die die Heizrohre in den ursprünglichen Zustand zurückbringen. - Die erfindungsgemäßen Hohlprofilbauelemente werden insbesondere als Heizelemente zum Beheizen der Innenräume von Gebäuden eingesetzt. Die durch den Luftströmungskanal strömende Luft wird mit Hilfe des durch die Heizrohre fließenden fluiden Mediums aufgeheizt und durch die Luftausströmöffnung an den Innenraum abgegeben. Es liegt im Rahmen einer Weiterbildung der Erfindung, dass sowohl die Lufteinströmöffnung als auch die Luftausströmöffnung zum Innenraum eines Gebäudes hin orientiert sind. Zweckmäßigerweise ist die Lufteinströmöffnung und/oder die Luftausströmöffnung in einer Längsseitenwand den Hohlprofilbauelementes vorgesehen. - Soweit im Patentanspruch 1 zumindest zwei Heizrohre beansprucht werden, meint dies vorzugsweise, dass das erste Heizrohr von dem aufgeheizten Heizmedium durchströmt wird, welches Heizmedium daraufhin in das zweite Heizrohr eintritt und dieses zweite Heizrohr bezüglich der Strömungsrichtung des ersten Heizrohres in entgegengesetzter Richtung durchströmt.

Nach einer Ausführungsform der Erfindung ist das erfindungsgemäße Hohlprofilbauelement als tragendes Bauelement bzw. tragender Hohlpfosten ausgebildet. Nach dieser Ausführungsform kommt dem Hohlprofilbauelement also eine tragende Funktion zu. Dabei kann das Hohlprofilbauelement beispielsweise zur Befestigung von Fensterelementen oder Brüstungsplatten eingesetzt werden. Fernerhin kann das Hohlprofilbauelement auch als Stützelement für Decken, Dächer und dergleichen dienen. - Nach einer anderen Ausführungsform der Erfindung kommt dem erfindungsgemäßen Hohlprofilbauelement keine tragende Funktion zu. Gemäß dieser Ausführungsform hat das Hohlprofilbauelement also nur die Funktion eines Heizkörpers und wird beispielsweise in der Innenwand eines Gebäudes untergebracht.

Nach sehr bevorzugter Ausführungsform, der im Rahmen der Erfindung besondere Bedeutung zukommt, ist das Hohlprofilbauelement vertikal orientiert und von der zu erwärmenden Luft sowie von dem Heizmedium in vertikaler Richtung durchströmbar. Die zu erwärmende Luft tritt durch die untere Lufteinströmöffnung in das Hohlprofilbauelement ein und durchströmt den Luftströmungskanal dann vertikal von unten nach oben und tritt durch die Luftausströmöffnung am oberen Ende des Hohlprofilbauelementes als erwärmte Luft wieder aus. Zweckmäßigerweise befindet sich ein Zulauf für das aufgeheizte Heizmedium im unteren Bereich des Hohlprofilbauelementes, bevorzugt im Bereich der Lufteinströmöffnung des Hohlprofilbauelementes. Vorzugsweise durchströmt das aufgeheizte Heizmedium das Hohlprofilbauelement bzw. den Luftströmungskanal des Hohlprofilbauelementes von unten nach oben in vertikaler Richtung bis in den Bereich der Luftausströmöffnung und strömt dann in umgekehrter Richtung von oben nach unten durch das Hohlprofilbauelement bzw. durch den Luftströmungskanal des Hohlprofilbauelementes. Es liegt im Rahmen einer Weiterbildung der Erfindung, dass das aufgeheizte Heizmedium durch mehrere Heizrohre von unten nach oben durch das Hohlprofilbauelement strömt sowie ebenfalls durch mehrere Heizrohre von oben nach unten strömt. Zweckmäßigerweise ist an den Zulauf für das aufgeheizte Heizmedium ein Verteiler angeschlossen, der das aufgeheizte Heizmedium auf mehrere Heizrohre verteilt. Es liegt im Rahmen einer Weiterbildung der Erfindung, dass das Hohlprofilbauelement im unteren Bereich, bevorzugt im Bereich der Lufteinströmöffnung einen Ablauf für das Heizmedium aufweist. Vorzugsweise ist an den Ablauf eine Sammeleinrichtung angeschlossen, in welche Sammeleinrichtung mehrere Heizrohre münden, so dass das Heizmedium aus der Sammeleinrichtung dem gemeinsamen Ablauf zugeführt wird. Der Ablauf ist zweckmäßigerweise zusammen mit dem Zulauf im Bereich der Lufteinströmöffnung vorgesehen. Nach einem Ausführungsbeispiel sind drei bis sechs Heizrohre an einen Zulauf angeschlossen und in das Hohlprofilbauelement eingesetzt und das aufgeheizte Heizmedium wird durch diese Heizrohre im Hohlprofilbauelement von unten nach oben geführt. Zweckmäßigerweise ist eine entsprechende Anzahl von Heizrohren in das Hohlprofilbauelement eingesetzt, durch welche Heizrohre das Heizmedium das Hohlprofilbauelement dann wieder von oben nach unten durchströmt. - Die vertikale Orientierung des Hohlprofilbauelementes ist im Rahmen der Erfindung aber nicht zwingend. Grundsätzlich ist es auch möglich, das erfindungsgemäße Hohlprofilbauelement horizontal anzuordnen. Dabei kann das Hohlprofilbauelement beispielsweise in der Decke oder auch im Boden eines Raumes vorgesehen werden. Zweckmäßigerweise sind dann die Lufteinströmöffnung und die Luftausströmöffnung zur Innenseite eines zugeordneten Raumes hin orientiert.

Nach bevorzugter Ausführungsform der Erfindung ist in dem Luftströmungskanal zumindest eine Luftförderungsvorrichtung vorgesehen. Luftförderungsvorrichtung meint eine gesondert angetriebene, vorzugsweise über elektrischen Strom angetriebene Vorrichtung, mit der eine Luftströmung in der gewünschten Strömungsrichtung eingeleitet bzw. aufrechterhalten wird. Nach sehr bevorzugter Ausführungsform der Erfindung wird ein Ventilator als Luftförderungsvorrichtung eingesetzt. Mit Hilfe der Luftförderungsvorrichtung wird die erforderliche Luftzirkulation auf effektive Weise unterstützt. Nach sehr bevorzugter Ausführungsform, der im Rahmen der Erfindung besondere Bedeutung zukommt, ist die Luftförderungseinrichtung, bevorzugt ein Ventilator, unmittelbar hinter der Lufteinströmöffnung angeordnet. Mit anderen Worten schließt die Luftförderungseinrichtung direkt an die Lufteinströmöffnung an.

Nach sehr bevorzugter Ausführungsform, der im Rahmen der Erfindung besondere Bedeutung zukommt, beträgt die Länge des unteren Längsabschnittes, in welchem die Lufteinströmöffnung und/oder die erste Öffnung angeordnet ist, ein Viertel der Gesamtlänge des Hohlprofilbauelementes oder ein Viertel der Gesamtlänge des Luftströmungskanals. Nach einer Ausführungsform der Erfindung beträgt die Länge des unteren Längsabschnittes ein Sechstel, vorzugsweise ein Achtel der Gesamtlänge des Hohlprofilbauelementes oder der Gesamtlänge des Luftströmungskanals. Unterer Längsabschnitt des Hohlprofilbauelementes meint im Rahmen der Erfindung, den an ein Stirnende bzw. an das untere Stirnende des Hohlprofilbauelementes anschließenden Längsabschnitt des Hohlprofilbauelementes. - Nach sehr bevorzugter Ausführungsform, der im Rahmen der Erfindung ebenfalls besondere Bedeutung zukommt, beträgt die Länge des oberen Längsabschnittes, in welchem die Luftausströmöffnung und/oder die zweite Öffnung angeordnet ist, ein Viertel der Gesamtlänge des Hohlprofilbauelementes oder ein Viertel der Gesamtlänge des Luftströmungskanals. Es liegt im Rahmen einer Weiterbildung der Erfindung, dass die Länge des oberen Längsabschnittes ein Sechstel, vorzugsweise ein Achtel der Gesamtlänge des Hohlprofilbauelementes oder der Gesamtlänge des Luftströmungskanals beträgt. Oberer Längsabschnitt meint im Rahmen der Erfindung insbesondere den an ein Stirnende bzw. an das obere Stirnende des Hohlprofilbauelementes anschließenden Längsabschnitt des Hohlprofilbauelementes. - Nach einer Ausführungsform der Erfindung entspricht die erste Öffnung zum Einführen oder Ausführen der Heizrohre der Lufteinströmöffnung. Nach dieser Ausführungsform können die Heizrohre also direkt durch die Lufteinströmöffnung eingeführt werden bzw. ausgeführt werden. Fernerhin entspricht nach einer Ausführungsform der Erfindung die zweite Öffnung zum Einführen oder Ausführen der Heizrohre der Luftausströmöffnung. Mit anderen Worten werden die Heizrohre also direkt durch die Luftausströmöffnung eingeführt oder ausgeführt. Nach einer anderen Ausführungsform der Erfindung befindet sich die Lufteinströmöffnung in einer Montageklappe, welche Montageklappe die erste Öffnung zum Einführen oder Ausführen der Heizrohre abdeckt. Dementsprechend gibt es eine Ausführungsform, bei der sich die Luftausströmöffnung in einer Montageklappe befindet, welche Montageklappe die zweite Öffnung zum Einführen oder Ausführen der Heizrohre abdeckt.

Es liegt im Rahmen einer Weiterbildung der Erfindung, dass zwischen dem unteren Längsabschnitt mit der zumindest einen Lufteinströmöffnung und dem oberen Längsabschnitt mit der zumindest einen Luftausströmöffnung keine weiteren Lufteinströmöffnungen und/oder Luftausströmöffnungen vorgesehen sind. Mit anderen Worten sind im mittleren Bereich des erfindungsgemäßen Hohlprofilbauelementes zweckmäßigerweise keine weiteren Öffnungen angeordnet.

An der Lufteinströmöffnung ist vorzugsweise zumindest ein Luftfilter vorgesehen. Damit werden Verschmutzungen im Innenraum des Hohlprofilbauelementes wirksam vermieden. - An der Luftausströmöffnung ist bevorzugt zumindest ein Strömungsbeeinflussungselement vorgesehen, wobei es sich um ein Strömungsgitter, eine Klappe, ein Ventil, eine Düse oder dergleichen handeln kann. Mit dem Strömungsbeeinflussungselement kann die Richtung und/oder die Intensität der Luftströmung eingestellt werden.

Die im Luftströmungskanal des Hohlprofilbauelementes vorgesehenen Heizrohre verlaufen zweckmäßigerweise parallel zueinander sowie geradlinig in Längsrichtung des Hohlprofilbauelementes. Zweckmäßigerweise wird das Heizmedium aus dem Bereich der Lufteinströmöffnung über eine Mehrzahl von parallelen ersten Heizrohren bis in den Bereich der Luftausströmöffnung geführt und wird das Heizmedium dann über eine Mehrzahl von parallelen zweiten Heizrohren aus dem Bereich der Luftausströmöffnung wieder in den Bereich der Lufteinströmöffnung zurückgeführt. Es liegt im Rahmen einer Weiterbildung der Erfindung, dass alle genannten Heizrohre parallel zueinander angeordnet sind und sich geradlinig in Längsrichtung des Luftströmungskanals bzw. des Hohlprofilbauelementes erstrecken.

Erfindungsgemäß sind die Heizrohre so flexibel ausgebildet, dass sie durch die erste Öffnung im unteren Längsabschnitt oder die zweite Öffnung im oberen Längsabschnitt eingeführt oder wieder herausgezogen werden können. Die Heizrohre sind also erfindungsgemäß entsprechend biegbar eingerichtet. Auf die erfindungsgemäßen Heizrohre wirken nach der Verformung bzw. Biegung elastische Rückstellkräfte ein, die die Heizrohre in den ursprünglichen Zustand zurückbringen. Ein geradlinig verlaufendes erfindungsgemäßes Heizrohr kehrt also nach einer Verformung bzw. nach einem Biegen in den ursprünglichen geradlinigen Zustand zurück. Insoweit unterscheiden sich die erfindungsgemäßen Heizrohre von Kunststoffschläuchen oder Gummischläuchen. Die Heizrohre können auch gleichsam bündelweise durch die erste Öffnung oder die zweite Öffnung eingeführt bzw. dem Hohlprofilbauelement wieder entnommen werden können. - Nach sehr bevorzugter Ausführungsform der Erfindung sind die Heizrohre als Kunststoffrohre ausgebildet. Dabei handelt es sich um dünnwandige Kunststoffrohre, die zweckmäßigerweise eine Wanddicke von 0,3 bis 3 mm, vorzugsweise von 0,5 bis 1,5 mm, beispielsweise von 1 mm aufweisen. Bei der Angabe der Wanddicke werden hier die Ausmaße von gegebenenfalls aus der Rohrwand herausragenden Profilelementen nicht berücksichtigt. Sehr bevorzugt werden Kunststoffrohre eingesetzt, die aus einem Polyalken bestehen. Nach einer Ausführungsform der Erfindung bestehen die Kunststoffrohre aus Polybuten. Es liegt im übrigen im Rahmen einer Weiterbildung der Erfindung, Heizrohre mit Längsrippen und/oder mit Querrippen oder mit anderen Profilierungen einzusetzen.

Der Erfindung liegt die Erkenntnis zugrunde, dass die bei den eingangs beschriebenen bekannten Hohlprofilbauelementen auftretenden Nachteile wirksamw vermieden werden können, wenn ein Hohlprofilbauelement gemäß Patentanspruch 1 verwirklicht wird. Vor allem können auf sehr einfache und problemlose Weise Montage-, Reparatur- und Wartungsarbeiten ausgeführt werden. Falls Störungen in der mit dem Hohlprofilbauelement verwirklichten Heizung auftreten, beispielsweise Leckagen, Verstopfungen und dergleichen an den Heizrohren, können diese Heizrohre dem Hohlprofilbauelement auf einfache Weise entnommen und ausgetauscht oder repariert werden. Dadurch, dass die Heizungsrohre im Bereich der Lufteinströmöffnung oder im Bereich der Luftausströmöffnung entnehmbar bzw. einführbar sind, müssen im Falle einer Störung keine größeren Bauelemente demontiert werden und vor allem ist es nicht erforderlich, das Hohlprofilbauelement als Ganzes zu entnehmen. Vielmehr finden die tatsächlichen Montage-, Reparatur- und Wartungsarbeiten an relativ kleinen Bereichen der Außenfläche des erfindungsgemäßen Hohlprofilbauelementes statt. Dementsprechend sind anschließend auch keine aufwendigen Renovierungen erforderlich, wenn das Hohlprofilbauelement beispielsweise Bestandteil einer Wand eines Innenraumes ist. Hervorzuheben ist weiterhin, dass sich das erfindungsgemäße Hohlprofilbauelement im Hinblick auf seine Heizeigenschaften durch einen überraschend hohen Wirkungsgrad auszeichnet. Dadurch, dass lediglich im unteren Bereich und im oberen Bereich des Hohlprofilbauelementes zumindest eine Lufteinströmöffnung bzw. zumindest eine Luftausströmöffnung angeordnet ist, wird überraschenderweise eine hervorragende Wärmeübertragung an die zirkulierende Luft sichergestellt. Das Verhältnis der zugeführten Energie zur tatsächlich bewirkten Heizleistung ist hervorragend. Die erfindungsgemäßen Hohlprofilbauelemente sind außerdem auf einfache und wenig aufwendige Weise herstellbar. Dadurch, dass die Lufteinströmöffnung lediglich im unteren Längsabschnitt und die Luftausströmöffnung lediglich im oberen Längsabschnitt des Hohlprofilbauelementes angeordnet ist, sind bei Einbau des erfindungsgemäßen Hohlprofilbauelementes in die Innenwand eines Gebäudes große störende Öffnungen, insbesondere im Mittelteil des Hohlprofilbauelementes, nicht mötig. Insoweit lässt sich mit dem erfindungsgemäßen Hohlprofilbauelement auf optimale Weise eine nicht sichtbare Heizung in Gebäuden verwirklichen. Im Ergebnis zeichnen sich die erfindungsgemäßen Hohlprofilbauelemente somit durch beachtliche Vorteile aus.

Nachfolgend wird die Erfindung anhand einer lediglich ein Ausführungsbeispiel darstellenden Zeichnung näher erläutert. Es zeigen in schematischer Darstellung:
- Fig. 1: perspektivische Ansicht des erfindungsgemäßen Hohlprofilbauelementes,
- Fig. 2: den Ausschnitt A aus Fig. 1 und
- Fig. 3: den Ausschnitt B aus Fig. 1.

Die Figuren zeigen ein Hohlprofilbauelement, das beispielsweise für den Einbau in Gebäudefassaden vorgesehen ist. Das Hohlprofilbauelement weist vorzugsweise und im Ausführungsbeispiel einen rechteckigen Querschnitt auf. Im Ausführungsbeispiel bildet der im Inneren des Hohlprofilbauelementes ausgebildete Hohlraum einen in Längsrichtung verlaufenden Luftströmungskanal 1. In dem Luftströmungkanal 1 sind eine Mehrzahl von Heizrohren 2, 3 angeordnet, welche Heizrohre 2, 3 von einem fluiden Heizmedium durchströmbar sind. Das fluide Heizmedium ist vorzugsweise und im Ausführungsbeispiel erwärmtes Wasser.

Im Bereich des unteren Stirnendes 4 ist ein Zulauf 5 für das fluide Heizmedium vorgesehen, welcher Zulauf 5 in dem Luftströmungskanal 1 des Hohlprofilbauelementes in einen Verteiler 6 mündet. Von dem Verteiler 6 wird das aufgeheizte fluide Heizmedium auf eine Mehrzahl von Heizrohren 2 verteilt. Die Heizrohre 2 sind dabei über Kupplungen 7 an den Verteiler 6 angeschlossen. Das aufgeheizte Heizmedium durchströmt die Heizrohre 2 bei bevorzugter vertikaler Anordnung des Hohlprofilbauelementes von unten nach oben, d. h. von dem Bereich des unteren Stirnendes 4 bis in den Bereich des oberen Stirnendes 8 des Hohlprofilbauelementes. Die Heizrohre 2 sind zweckmäßigerweise und im Ausführungsbeispiel parallel zueinander und in einer Ebene angeordnet. Im Bereich des oberen Stirnendes 8 münden die Heizrohre 2 in eine erste Sammeleinrichtung 9, von welcher ersten Sammeleinrichtung 9 das Heizmedium auf Heizrohre 3 verteilt wird, durch welche Heizrohre 3 das Heizmedium das Hohlprofilbauelement von oben nach unten durchströmt, d. h. vom Bereich des oberen Stirnendes 8 bis zum Bereich des unteren Stirnendes 4. Auch die Heizrohre 3 sind zweckmäßigerweise und im Ausführungsbeispiel parallel zueinander und in einer Ebene angeordnet. Nach sehr bevorzugter Ausführungsform und im Ausführungsbeispiel sind die Heizrohre 2, 3 als Kunststoffrohre ausgebildet. Im Bereich des unteren Stirnendes 4 münden die Heizrohre 3 in eine zweite Sammeleinrichtung 10. Von der zweiten Sammeleinrichtung 10 wird das Heizmedium über einen im Bereich des unteren Stirnendes 4 angeordneten Ablauf 11 wieder abgeführt.

Das erfindungsgemäße Hohlprofilbauelement weist in einem unteren Längsabschnitt 22 eine Lufteinströmöffnung 12 auf. Der untere Längsabschnitt 22 schließt an das untere Stirnende 4 an. Zweckmäßigerweise und im Ausführungsbeispiel ist die Lufteinströmöffnung 12 in einer Längsseitenwand 24 des Hohlprofilbauelementes vorgesehen. Fernerhin ist im oberen Längsabschnitt 23 eine Luftausströmöffnung 13 vorgesehen. Der obere Längsabschnitt 23 schließt an das obere Stirnende 8 des Hohlprofilbauelementes an. Zweckmäßigerweise und im Ausführungsbeispiel ist die Luftausströmöffnung 13 in einer Längsseitenwand 25 des Hohlprofilbauelementes vorgesehen. Oben wurde bereits erwähnt, daß das Hohlprofilbauelement nach bevorzugter Ausführungsform der Erfindung vertikal orientiert ist bzw. mit vertikaler Ausrichtung in eine Gebäudefassade bzw. Gebäudewand eingebaut wird. Gemäß dieser Ausführungsform tritt die zu erwärmende Luft unten durch die Lufteinströmöffnung 12 in das Hohlprofilbauelement ein, wird dann mit Hilfe des durch die Heizrohre 2, 3 fließenden Heizmediums aufgeheizt und die aufgeheizte Luft tritt anschließend aus der Luftausströmöffnung 13 wieder aus. Vorzugsweise und im Ausführungsbeispiel wird das Hohlprofilbauelement sowohl von der zu erwärmenden Luft als auch von dem durch den Zulauf 5 zugeführten aufgeheiztem Heizmedium von unten nach oben in vertikaler Richtung durchströmt. Zweckmäßigerweise und im Ausführungsbeispiel ist unmittelbar hinter der Lufteinströmöffnung 12 ein Ventilator 14 angeordnet, der die Luftströmung auf effektive Weise unterstützt. Fernerhin ist hinter der Lufteinströmöffnung 12 vorzugsweise und im Ausführungsbeispiel ein Leitblech 15 für die einströmende Luft vorgesehen.

Nach bevorzugter Ausführungsform und im Ausführungsbeispiel beträgt die Länge des unteren Längsabschnittes 22, in welchem die Lufteinströmöffnung 12 angeordnet ist, ein Sechstel, sehr bevorzugt ein Achtel der Gesamtlänge des Hohlprofilbauelementes oder des Luftströmungskanals 1. Nach ebenso bevorzugter Ausführungsform der Erfindung beträgt die Länge des oberen Längsabschnittes 23, in welchem die Luftausströmöffnung 13 angeordnet ist, ein Sechstel, sehr bevorzug ein Achtel der Gesamtlänge des Hohlprofilbauelementes oder der Gesamtlänge des Luftströmungskanals 1. Es liegt im Rahmen einer Neiterbildung der Erfindung, daß zwischen der Lufteinströmöffnung 12 im unteren Bereich des Hohlprofilbauelementes und der Luftausströmöffnung 13 im oberen Bereich des Hohlprofilbauelementes keine weiteren Lufteinströmöffnungen 12 bzw. Luftausströmöffnungen 13 vorgesehen sind. Mit anderen Worten ist der mittlere Abschnitt 16 des Hohlprofilbauelementes öffnungsfrei ausgebildet.

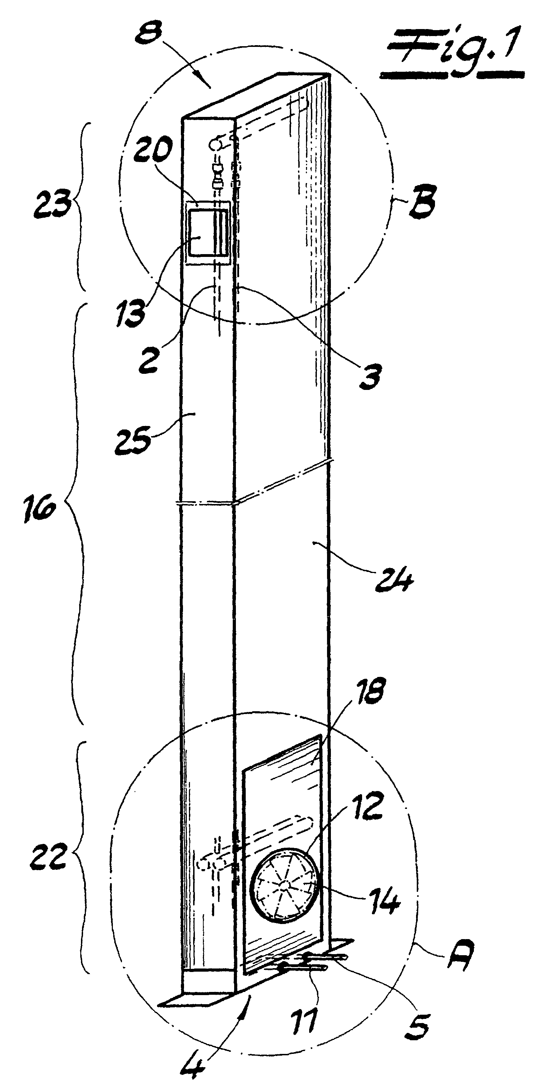

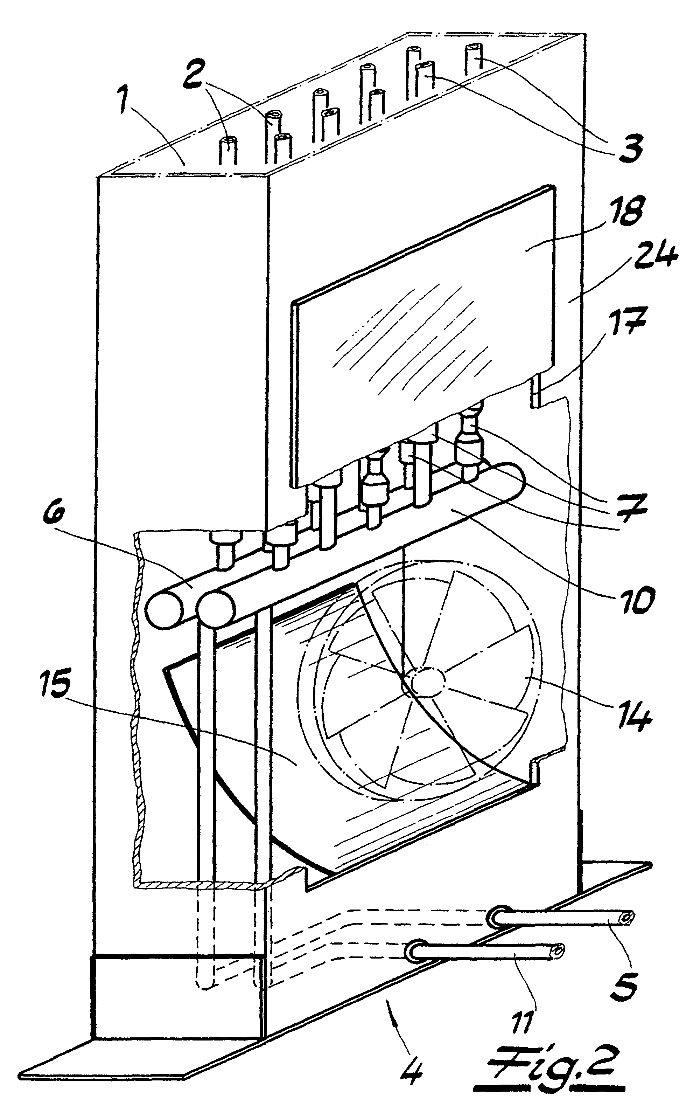

Gemäß der Erfindung sind die Heizrohre 2, 3 so flexibel ausgebildet, daß sie durch eine erste Öffnung 17 in das Hohlprofilbauelement einführbar oder ausführbar sind, die im unteren Längsabschnitt 22 des Hohlprofilbauelementes angeordnet ist. In einer Ausführungsform beträgt der untere Längsabschnitt 22 ein Sechstel, bevorzugt ein Achtel der Gesamtlänge des Luftströmungskanals 1 oder des Hohlprofilbauelementes. Im Ausführungsbeispiel nach den Fig. 1 und 2 ist die erste Öffnung 17 mit einer Montageklappe 18 verschließbar. In der Montageklappe 18 befindet sich im Ausführungsbeispiel die Lufteinströmöffnung 12. Zweckmäßigerweise und im Ausführungsbeispiel ist der Ventilator 14 an die Montageklappe 18 angeschlossen, mit welcher die erste Öffnung 17 verschlossen wird.

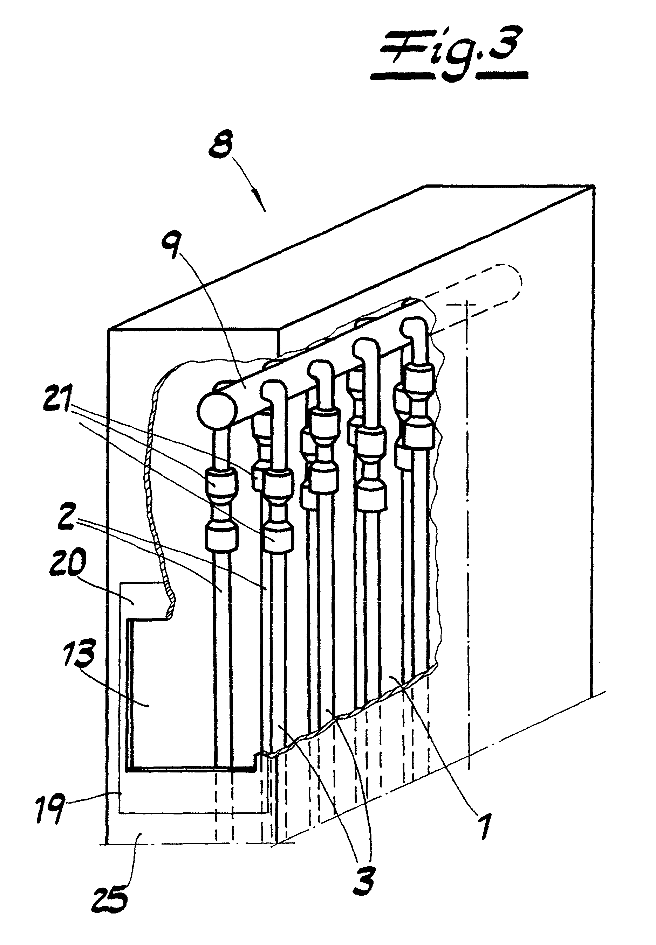

Gemäß der Erfindung sind die Heizrohre 2, 3 so flexibel ausgebildet, daß sie durch eine zweite Öffnung 19 einführbar oder ausführbar sind, welche zweite Öffnung 19 im oberen Längsabschnitt 23 angeordnet ist. Die Länge des oberen Längsabschnitts 23 beträgt vorzugsweise ein Sechstel, bevorzugt ein Achtel der Gesamtlänge des Luftströmungskanals 1 oder des Hohlprofilbauelementes. Im Ausführungsbeispiel (Fig. 1, 3) wird die zweite Öffnung 19 durch eine Montageklappe 20 verschlossen, in welcher Montageklappe 20 sich die Luftausströmöffnung 13 befindet.

Im Ausführungsbeispiel nach den Figuren ist jedoch in erster Linie die erste Öffnung 17 im Bereich des unteren Stirnendes 4 des Hohlprofilbauelementes dazu ausgelegt, die Heizrohre 2, 3 dem Hohlprofilbauelement zu entnehmen bzw. wieder in das Hohlprofilbauelement einzuführen. Dies ist beispielsweise dann zweckmäßig, wenn Beschädigungen, Leckagen, Verstopfungen und dergleichen an den Heizrohren 2, 3 auftreten und die Heizrohre 2, 3 ausgetauscht werden müssen. Hierzu wird zweckmäßigerweise die Montageklappe 18: entfernt und die Kupplung 7 zwischen dem zu entnehmenden Heizrohr 2 und dem Verteiler 6 wird gelöst. Über die Luftausströmöffnung 13 oder nach Entfernen der Montageklappe 20 über die zweite Öffnung 19 wird dann zweckmäßigerweise eine; Kupplung 21 zwischen dem zu entnehmenden Heizrohr 2 und der ersten Sammeleinrichtung 9 gelöst. Daraufhin wird vorzugsweise das betreffende Heizrohr 2 durch die erste Öffnung 17 aus dem Hohlprofilbauelement bzw. aus dem Luftströmungskanal 1 herausgezogen. Das reparierte und/oder gereinigte Heizrohr 2 oder ein entsprechendes Austausch-Heizrohr kann dann wieder über die erste Öffnung 17 in den Luftströmungskanal 1 eingeführt werden und über die Kupplungen 7, 21 an den Verteiler 6 bzw. an die erste Sammeleinrichtung 9 angeschlossen werden. Es versteht sich, daß die Heizrohre 3 in entsprechender Weise entnommen werden können bzw. in das Hohlprofilbauelement eingeführt werden können. - In den Figuren ist erkennbar, daß die erste Öffnung 17 und/oder die zweite Öffnung 19 in einer Längsseitenwand 24, 25 des Hohlprofilbauelementes vorgesehen ist.

## Patentansprüche

1. Hohlprofilbauelement, insbesondere für den Einbau in Gebäudefassaden,
wobei zumindest ein in Längsrichtung des Hohlprofilbauelementes verlaufender Luftströmungskanal (1) vorgesehen ist,
wobei in dem Luftströmungskanal (1) zumindest zwei Heizrohre (2, 3) angeordnet sind, welche Heizrohre (2, 3) von einem fluiden Heizmedium durchströmbar sind,
wobei das Hohlprofilbauelement in einem unteren Längsabschnitt (22) zumindest eine Lufteinströmöffnung (12) und in einem oberen Längsabschnitt (23) zumindest eine Luftausströmöffnung (13) aufweist,
wobei die Heizrohre (2, 3) flexibel mit der Maßgabe ausgebildet sind, dass sie durch eine erste Öffnung (17) in einer Längsseitenwand im unteren Längsabschnitt (22) oder durch eine zweite Öffnung (19) in einer Längsseitenwand im oberen Längsabschnitt (23) in das Hohlprofilbauelement einführbar sind oder aus dem Hohlprofilbauelement entnehmbar sind
und wobei die Heizrohre mit der Maßgabe ausgebildet sind, dass auf die Heizrohre nach einer Verformung beim Einführen in das Hohlprofilbauelement durch eine der Öffnungen (17, 19) oder beim Entnehmen aus dem Hohlprofilbauelement durch eine der Öffnungen (17, 19) elastische Rückstellkräfte einwirken, die die Heizrohre in den ursprünglichen Zustand zurückbringen.

2. Hohlprofilbauelement nach Anspruch 1, wobei das Hohlprofilbauelement vertikal orientiert ist und von der zu erwärmenden Luft sowie von dem Heizmedium in vertikaler Richtung durchströmbar ist.

3. Hohlprofilbauelement nach einem der Ansprüche 1 oder 2, wobei in dem Luftströmungskanal (1) zumindest eine Luftförderungsvorrichtung vorgesehen ist.

4. Hohlprofilbauelement nach Anspruch 3, wobei die Luftförderungseinrichtung unmittelbar hinter der Lufteinströmöffnung (12) angeordnet ist.

5. Hohlprofilbauelement nach einem der Ansprüche 1 bis 4, wobei die Länge des unteren Längsabschnittes (22), in welchem die Lufteinströmöffnung (12) und/oder die erste Öffnung (17) angeordnet ist, ein Viertel der Gesamtlänge des Hohlprofilbauelementes beträgt.

6. Hohlprofilbauelement nach einem der Ansprüche 1 bis 5, wobei die Länge des oberen Längsabschnittes (23), in welchem die Luftausströmöffnung (13) und/oder die zweite Öffnung (19) angeordnet ist, ein Viertel der Gesamtlänge des Hohlprofilbauelementes beträgt.

7. Hohlprofilbauelement nach einem der Ansprüche 1 bis 6, wobei die Heizrohre (2, 3) als Kunststoffrohre ausgebildet sind.

## Claims

1. A hollow-section building component, in particular for installation in building facades,
whereby at least one air flow duct (1) running in the longitudinal direction of the hollow-section building component is provided,
whereby at least two heating pipes (2, 3) are arranged in the air flow duct (1), through which heating pipes (2, 3) a fluid heating medium can flow,
whereby the hollow-section building component has at least one air admission opening (12) in a lower longitudinal section (22) and at least one air exit opening (13) in an upper longitudinal section (23),
whereby the heating pipes (2, 3) are designed flexible, with the provision that they can be introduced into the hollow-section building component or removed from the hollow-section building component through a first opening (17) in a longitudinal side wall in the lower longitudinal section (22) or through a second opening (19) in a longitudinal side wall in the upper longitudinal section (23),
and whereby the heating pipes are designed with the provision that elastic restoring forces, which return the heating pipes to their original state, act on the heating pipes after a deformation during the introduction into the hollow-section building component through one of the openings (17, 19) or during the removal from the hollow-section building component through one of the openings (17, 19).

2. The hollow-section building component according to claim 1, whereby the hollow-section building component is orientated vertically and the air to be heated and the heating medium can flow through it in the vertical direction.

3. The hollow-section building component according to claim 1 or 2, whereby at least one air-conveying device is provided in the air flow duct (1).

4. The hollow-section building component according to claim 3, whereby the air-conveying device is arranged immediately behind the air admission opening (12).

5. The hollow-section building component according to any one of claims 1 to 4, whereby the length of the lower longitudinal section (22), in which the air admission opening (12) and/or the first opening (17) is arranged, is one quarter of the total length of the hollow-section building component.

6. The hollow-section building component according to any one of claims 1 to 5, whereby the length of the upper longitudinal section (23), in which the air exit opening (13) and/or the second opening (19) is arranged, is one quarter of the total length of the hollow-section building component.

7. The hollow-section building component according to any one of claims 1 to 6, whereby the heating pipes (2, 3) are designed as plastic pipes.

## Revendications

1. Elément de construction en profilé creux, en particulier pour le montage dans des façades de bâtiment,
moyennant quoi au moins un canal d'écoulement d'air (1) agencé dans le sens longitudinal de l'élément de construction en profilé creux est prévu,
moyennant quoi au moins deux tuyaux de chauffage (2, 3) sont disposés dans le canal d'écoulement d'air (1), lesquels tuyaux de chauffage (2, 3) peuvent être traversés par un agent de chauffage fluide,
moyennant quoi l'élément de construction en profilé creux présente au moins une ouverture d'entrée d'air (12) dans une partie longitudinale (22) inférieure et au moins une ouverture de sortie d'air (13) dans une partie longitudinale (23) supérieure,
moyennant quoi les tuyaux de chauffage (2, 3) sont conçus de façon flexible de telle façon qu'ils peuvent être introduits dans l'élément de construction en profilé creux par une première ouverture (17) dans une paroi latérale longitudinale dans la partie longitudinale (22) inférieure ou par une deuxième ouverture (19) dans une paroi latérale longitudinale dans la partie longitudinale (23) supérieure ou peuvent être enlevés de l'élément de construction en profilé creux.
et moyennant quoi les tuyaux de chauffage sont conçus de telle façon que des forces de rappel élastiques, qui ramènent les tuyaux de chauffage dans l'état initial, agissent sur les tuyaux de chauffage après une déformation lors de l'introduction dans l'élément de construction en profilé creux par l'une des ouvertures (17, 19) ou lors du prélèvement de l'élément de construction en profilé creux par l'une des ouvertures (17, 19).

2. Elément de construction en profilé creux selon la revendication 1, l'élément de construction en profilé creux étant orienté verticalement et pouvant être parcouru par l'air à réchauffer et par l'agent de chauffage dans le sens vertical.

3. Elément de construction en profilé creux selon l'une quelconque des revendications 1 ou 2, au moins un dispositif de transport d'air étant prévu dans le canal d'écoulement d'air (1).

4. Elément de construction en profilé creux selon la revendication 3, le dispositif de transport d'air étant disposé juste derrière l'ouverture d'entrée d'air (12).

5. Elément de construction en profilé creux selon l'une quelconque des revendications 1 à 4, la longueur de la partie longitudinale (22) inférieure, dans laquelle est disposée l'ouverture d'entrée d'air (12) et/ou la première ouverture (17), étant égale à un quart de la longueur totale de l'élément de construction en profilé creux.

6. Elément de construction en profilé creux selon l'une quelconque des revendications 1 à 5, la longueur de la partie longitudinale (23) supérieure, dans laquelle est disposée l'ouverture de sortie d'air (13) et/ou la deuxième ouverture (19), est égale à un quart de la longueur totale de l'élément de construction en profilé creux.

7. Elément de construction en profilé creux selon l'une quelconque des revendications 1 à 6, les tuyaux de chauffage (2, 3) étant conçus comme des tuyaux plastique.
